# EUROPÄISCHE PATENTSCHRIFT

(11) **EP 1 020 115 B1**
(45) Veröffentlichungstag und Bekanntmachung des Hinweises auf die Patenterteilung: **11.06.2003**
(21) Anmeldenummer: 00100213.8
(22) Anmeldetag: 14.01.2000
(51) Int. Cl.: A01N 31/02

(54) **Desinfektionsmittel und Antiseptikum auf der Basis von Alkoholen**
Disinfecting agent and antiseptic based on alcohols
Agent désinfectant et antiseptique à base d'alcools

(30) Priorität: 16.01.1999 DE 19901526; 16.01.1999 DE 29900687 U
(43) Veröffentlichungstag der Anmeldung: 19.07.2000
(73) Patentinhaber: Bode Chemie GmbH & Co., 22525 Hamburg (DE)
(72) Erfinder: Bloss, Richard, Dr., 25462 Rellingen (DE)
(74) Vertreter: Dinné, Erlend

(56) Entgegenhaltungen:
- EP-A- 0 692 192
- WO-A-97/35475
- DE-A- 4 241 079
- WEWALKA, GUENTHER ET AL: "Comparison of the efficacy of 14 procedures for the hygienic disinfection of hands" ZENTRALBL. BAKTERIOL., PARASITENKD., INFEKTIONSKR. HYG., ABT. 1: ORIG., REIHE B (1977), 165(2), 242-9 ,1977, XP000909208
- S S BLOCK: "Disinfection, Sterilization and Preservation, 4th Edition " , LEA & FEBIGER , PHILADELPHIA, US XP002137290 chapter 11 (pages 191-203. "Alcohols") * das ganze Dokument *

## Beschreibung

Die vorliegende Erfindung betrifft alkoholische Desinfektionsmittel und Antiseptika, insbesondere alkoholische Desinfektionsmittel und Antiseptika zur Flächendesinfektion.

Als Mittel zur Desinfektion, Konservierung und Antiseptik sind eine Vielzahl mikrobizid wirksamer chemischer Substanzen bzw. Gemische dieser Substanzen an sich bekannt Mikrobizide Substanzen sind im allgemeinen gegen das übliche Spektrum von Keimen, wie beispielsweise grampositive Bakterien, gramnegative Bakterien, Mykobakterien, Hefen, Pilze, Viren und dergleichen, mehr oder weniger wirksam, so daß man üblicherweise eine ausreichende Desinfektion, Konservierung oder Antiseptik durch geeignete Wirkstoffkombinationen erzielen kann.

Der Stand der Technik kennt zur Desinfektion, Konservierung und Antiseptik eine Reihe von Wirkstoffen, insbesondere Aldehyde, wie beispielsweise Formaldehyd oder Glutaraldehyd, quatemäre Ammoniumverbindungen und langkettige Amine, Phenole oder Alkohole. Allerdings weisen die genannten Verbindungen einige Nachteile auf:

Aldehyde fixieren Reste von Blut und Eiweiß durch chemische Reaktion an den zu desinfizierenden Gegenständen, so daß diese nach der Desinfektion schwer zu reinigen sind. Außerdem haben sie ein vergleichsweise hohes allergenes Potential, so daß Anwendungen auf Haut und Händen nur in geringen Konzentrationen möglich sind oder aber in Kombination mit weiteren Wirkstoffen in Betracht kommen, um die erforderliche Unterschreitung der Sensibilisierungsschwelle einhalten zu können. Höhere Konzentrationen von Aldehyden sind auch wegen ihres Geruches unerwünscht, so daß man auch aus diesem Grund die Konzentration durch Kombination mit weiteren Wirkstoffen verringert. Die Anwendungsbereiche von Aldehyden werden femer durch die umstrittene karzinogene Potenz sowie die Mutagenität dieser Stoffklasse weiter eingeschränkt.

Quatemäre Ammoniumverbindungen und langkettige Amine werden häufig in der Flächendesinfektion und zur manuellen Instrumentendesinfektion sowie in geringem Umfang auch in der Händeantiseptik verwendet. Im Vergleich zu den Aldehyden ist der Geruch dieser Verbindungen deutlich weniger unangenehm. Eine chemische Reaktion mit Eiweißen erfolgt nicht, jedoch kommt es zu einer physikalischen Fällung von Eiweißen, die zum Teil durch geschickte Kombination mit Tensiden kompensiert werden kann. Für die maschinelle Instrumentendesinfektion sind die quatemären Ammoniumverbindungen nicht geeignet, weil es infolge der Turbulenzen in der Reinigungsmaschine zu einer starken, unerwünschten Schaumbildung kommt. Bei der Flächendesinfektion zeigen quatemäre Ammoniumverbindungen eine starke Tendenz, auf den Oberflächen "aufzuziehen", d. h. es bilden sich Schichten dieser Verbindungen auf den Oberflächen aus. Ein weiterer entscheidender Nachteil ist das eingeengte Wirkungsspektrum quatemärer Ammoniumverbindungen, da diese weder sporozid noch gegen unbehüllte Viren wirken.

Phenole sind vor allem wegen ihres Geruches, ihrer geringen Wirksamkeit gegen den Poliovirus, ihrer zum Teil schlechten Abbaubarkeit, ihrer hohen Lipidlöslichkeit verbunden mit einer starken Penetration durch die Haut sowie toxischer und mutagener Risiken in nahezu allen Anwendungsbereichen für Desinfektionsmittel auf dem Rückzug.

Die aliphatischen Alkohole Ethanol, Propanol-1 und Propanol-2 sind als Wirkstoffe zur Desinfektion von Haut und Händen bzw. für die Haut- und Händeantiseptik seit langem bekannt. Mit Desinfektionsmitteln und Antiseptika auf der Basis von Alkoholen können bei kurzen Einwirkzeiten von 30 bis 60 Sekunden Keimzahlreduktionen von bis zu 99,9 % erzielt werden. Eine allgemeine, kurzgefaßte Darstellung der mikrobiziden Wirksamkeit von Alkoholen findet sich in dem Buch: *K.H. Wallhäußer, "Praxis der Sterilisation, Desinfektion und Konservierung", G. Thieme Verlag, Stuttgart, New York, 5. Auflage, S. 469-474.*

Alkohole besitzen eine bakterizide Wirkung, die von Methanol zu Propanol zunimmt Verwendet werden vor allem Ethanol, n-Propanol und Isopropanol, wobei der Alkoholgehalt der Zubereitungen im allgemeinen zwischen 50 und 80 % liegt. Der wesentliche Vorteil von Alkoholen ist, daß der Wirkungseintritt sehr rasch erfolgt. Nachteilig ist, daß sie nicht gegen Sporen wirksam sind und daß die Wirkung nach sehr kurzer Zeit endet, da Alkohole schnell verdunsten. Eine antivirale Wirksamkeit von Alkoholen wird zwar diskutiert, aber erst jenseits einer hohen Konzentrationsgrenze, welche bei Ethanol bei ca. 80 % vermutet wird.

Es hat sich in der Praxis gezeigt, daß alkoholische Desinfektionsmittel und Antiseptika Viren und Spuren von Bacillus- und Clostridienarten nicht oder nicht in hinreichendem Maße abzutöten vermögen. Zwar kann man die Sporenfreiheit von alkoholischen Lösungen durch Filtration erreichen, allerdings kann in der Praxis nicht vollständig ausgeschlossen werden, daß Keimsporen (nachträglich) in die Präparate gelangen, beispielsweise beim kurzzeitigen Öffnen der Aufbewahrungsgefäße oder beim Abfüllen der Mittel in Behälter, die bereits Sporen enthalten. Aus diesem Grund besteht bei der Verwendung von alkoholischen Haut- und Handantiseptika stets ein gewisses Risiko einer durch Sporen verursachten Infektion.

Aufgabe der Erfindung ist es, die Nachteile des Standes der Technik zu vermeiden und alkoholhaltige Desinfektionsmittel und Antiseptika zu finden, die eine hohe mikrobizide Wirkung zeigen und dabei gleichzeitig sporozid wirksam sind und welche sich durch eine gute Verträglichkeit auszeichnen und insbesondere zur Desinfektion von Oberflächen geeignet sind.

Es war indes überraschend und für den Fachmann nicht vorauszusehen, daß ein Desinfektionsmittel oder Antiseptikum, enthaltend

| | | |
|---|---|---|
| (a) | 42 - 47 Gew.-% | 1-Propanol |
| (b) | 22 - 27 Gew.-% | 2-Propanol |
| (c) | 4 - 6 Gew.-% | Ethanol |
| (d) | mindestens 20 Gew.-% | Wasser |
| (e) | höchstens 0,0001 Gew.-% | an Substanzen, welche unter Normalbedingen als Festkörper vorliegen |
| (f) | keinen wirksamen Gehalt | an weiteren Substanzen, welche sich durch viruzide Eigenschaften auszeichnen |

die Lösung dieser Aufgaben begründet.

Desinfektionsmittel und Antiseptika im Sinne der vorliegenden Erfindung sind besonders geeignet zur Flächendesinfektion, aber gewünschtenfalls auch zur Behandlung der Hände und der Haut. Eifindungsgemäße Desinfektionsmittel und Antiseptika zeigen eine sehr gute Wirksamkeit gegen Dermatophyten und zeichnen sich überraschenderweise insbesondere dadurch aus, daß sie eine gute Wirksamkeit gegen Viren haben.

Die Bestandteile der erfindungsgemäßen Desinfektionsmittel und Antiseptika agieren in Bezug auf ihre antimikrobiellen und antiviralen Eigenschaften synergistisch, also in signifikanter Weise überadditiv.

Die bakterizide und fungizide Wirkung der erfindungsgemäßen Formulierungen ist ausgesprochen gut. Von Vorteil für ihre Anwendung im Bereich der Desinfektion von unbelebten Oberflächen, insbesondere harten Oberflächen und Geräten, ist vor allem ihre inaktivierende Wirkung auf das HIV-Virus sowie auf das Hepatitis B-Virus. Das Hepatitis B-Oberflächenantigen wird bereits nach einer Einwirkungszeit von 5 Minuten zerstört

Erfindungsgemäß ist demgemäß auch die Verwendung einer Zubereitung aus

| | | |
|---|---|---|
| (a) | 42 - 47 Gew.-% | 1-Propanol |
| (b) | 22 - 27 Gew.-% | 2-Propanol |
| (c) | 4- 6 Gew.-% | Ethanol |
| (d) | mindestens 20 Gew.-% | Wasser |
| (e) | höchstens 0,0001 Gew.-% | an Substanzen, welche unter Normalbedingen als Festkörper vorliegen |
| (f) | keinen wirksamen Gehalt | an weiteren Substanzen, welche sich durch viruzide Eigenschaften auszeichnen |

als Desinfektionsmittel oder Antiseptikum, insbesondere die Verwendung zur Bekämpfung oder Inaktivierung des HIV-Virus oder des Hepatitis B-Virus.

Die Prüfung von Desinfektionsmitteln auf Wirksamkeit gegenüber beispielsweise dem Hepatitis B-Virus (HBV) ist eine notwendige Untersuchung, da im Krankenhaus und in der ärztlichen und zahnärztlichen Praxis der Desinfektion von Flächen, Instrumenten, Händen und Wäsche eine große Bedeutung zur Unterbrechung von HBV-Infektketten zukommt Die Evaluierung von Desinfektionsmitteln ist allerdings fast ausschließlich mit indirekten Methoden möglich, da in-vitro-Vermehrungssysteme für das HBV nicht existieren, und da Schimpansenversuche ethisch umstritten und praktisch nur in wenigen Ausnahmefällen durchführbar sind. Deshalb muß die Hepatitis-B-Wirksamkeit mit einem indirekten Verfahren bestimmt werden.

Bislang sind drei indirekte Methoden veröffentlicht worden:
1. Zerstörung des Oberflächenantigens (z.B. Hepatitis B surface Antigen = HBsAG)
2. Morphologischer Alterations- und Desintegrationstest (MADT)
3. Inaktivierung der spezifischen (z.B. HBV assoziierten) DNS-Polymerase

Zubereitungen mit einem antiviral wirksamen Gehalt an wenigstens einer weiteren Substanz, welche nach Anwendung wenigstens einer dieser drei Testmethoden auf die antivirale Wirksamkeit dieser Substanzen schließen ließe, sind daher nicht Gegenstand der vorliegenden Erfindung.

Es ist erstaunlicherweise möglich, auf zusätzliche antivirale Substanzen zu verzichten und daher das ihnen gegebenenfalls innewohnende Gefahrenpotential zu meiden. Was eine antivirale Substanz im Sinne der hiermit vorliegenden Offenbarung darstellt, bemißt sich nach,den Kriterien der drei vorgenannten indirekten Methoden.

Ein weiterer überraschender Vorteil der erfindungsgemäßen Desinfektionsmittel besteht darin, daß sie sich durch einen relativ hohen Flammpunkt, üblicherweise höher als 24 °C, auszeichnen, weshalb sie als Quelle für Feuergefahr nicht über die Maßen zu berücksichtigen sind.

Zusätzlich zu den vorstehend genannten Komponenten können die erfindungsgemäßen Desinfektionsmittel für derartige Zubereitungen übliche Vergällungsmittel, Farbstoffe. Duftstoffe und/oder andere übliche Hilfsstoffe enthalten. Diese tragen in der Mehrzahl der Fälle nicht zur desinfizierenden Wirkung bei, sondem dienen der Lagerbarkeit sowie ästhetischen Zwecken. Es ist jedoch auch gewünschtenfalls möglich, solche Komponenten zu verwenden, die eine pflegende Wirkung entfalten und dabei gleichzeitig für eine bestimmte Farbe und/oder einen angenehmen Duft sorgen, sofern die erfindungsgemäßen Merkmale gewahrt beleiben.

Als Treibmittel für aus Aerosolbehältern versprühbare kosmetische und/oder dermatologische Zubereitungen im Sinne der vorliegenden Erfindung sind die üblichen bekannten leichtflüchtigen, verflüssigten Treibmittel, beispielsweise Kohlenwasserstoffe (Propan, Butan, Isobutan) geeignet, die allein oder in Mischung miteinander eingesetzt werden können. Auch Druckluft ist vorteilhaft zu verwenden. Ein gegebenenfalls vorhandener Anteil an einem oder mehreren Treibmitteln würde zusätzlich zu der unter den Punkten (a) - (f) aufgeführten Gewichtsteilanteilen anfallen.

Natürlich weiß der Fachmann, daß es an sich nichttoxische Treibgase gibt, die grundsätzlich für die Verwirklichung der vorliegenden Erfindung in Form von Aerosolpräparaten geeignet wären, auf die aber dennoch wegen bedenklicher Wirkung auf die Umwelt oder sonstiger Begleitumstände verzichtet werden sollte, insbesondere Fluorkohlenwasserstoffe und Fluorchlorkohlenwasserstoffe (FCKW).

Das folgende Beispiel dient dazu, die Erfindung zu beschreiben, selbstverständlich ohne daß beabsichtigt ist, die Erfindung auf dieses Beispiel zu beschränken. Alle Mengenangaben, Anteile und Prozentanteile sind, soweit nicht anders angegeben, auf das Gewicht und die Gesamtmenge bzw. auf das Gesamtgewicht der Zubereitungen bezogen.

### Beispiel:

| | Gew.-% |
|---|---|
| 1-Propanol | 45,00 |
| 2-Propanol | 25,00 |
| Ethanol | 4,70 |
| 2-Butanon | 0,05 |
| Wasser | ad 100,00 |

wurden miteinander bei Raumtemperatur gemischt und gelöst. Es entstand eine klare, farblose Lösung.

### Wirksamkeitsnachweis:

Die Desinfektionsmittelversuche erfolgten im Suspensionsversuch bei Raumtemperatur, wobei die Volumenverhältnisse und die Eiweißbelastung entsprechend der Richtlinie des Bundesgesundheitsamtes (BGA) und der Deutschen Vereinigung zur Bekämpfung der Viruskrankheiten e. V. (DW) zur Prüfung von chemischen Desinfektionsmitteln auf Wirksamkeit gegen Viren vorgenommen wurden.

Der Versuchsansatz bestand aus einem Teil eines HBsAg-haltigen Serums (HBsAg und HBeAg pos., DNS-Polymerase nachweisbar, HBV-PCR pos., Virus-Genome ≥ 10⁸/ml), einem Teil Aqua bidest. bzw. einem Teil einer 2%igen Serumalbuminlösung bzw. einem Teil fötalen Kalberserums (FKS) und acht Volumenteilen des zu prüfenden Desinfektionsmittels.

Unmittelbar nach Ablauf der Einwirkzeit erfolgte eine 1 : 100 - Verdünnung des Versuchsansatzes mit PBS, das 10% FKS enthielt, um die Wirkung des Desinfektionsmittels durch Verdünnung aufzuheben. Anschließend ist jeder Ansatz als Doppelbestimmung auf HBsAg in einem Radioimmoassay (RIA) (Ausria II, Abbott Lab., North Chicago, Illinois, USA) untersucht und der Mittelwert der Radioaktivität errechnet worden.

Folgende Kontrollen sind überdies mitgeführt worden. Ein Versuchsansatz, der Aqua bidest. anstelle des Desinfektionsmittels enthielt und der nach der längsten der geprüften Einwirkzeiten auf HBsAg untersucht wurde. Dieser Ansatz, der auch mit Serumalbumin und FKS vorgenommen wurde, stellte die Ausgangswerte für die Berechnung der Abnahme des HBsAg dar. Femer erfolgte ein Versuchsansatz ohne Viruszugabe (Desinfektionsmittel-Kontrollen) sowie ein Versuchsansatz ausschließlich mit dem Verdünnungsmittel, um auf diese Weise durch einen Vergleich der Werte eine Unspezifität durch vorhandenes Desinfektionsmittel zu erkennen.

Es wurde dann von einer völligen Inaktivierung des HBsAg ausgegangen, wenn die Radioaktivität (cpm) nach Einwirkung des Desinfektionsmittels unter dem 2,1-fachen der Radioaktivität (cpm) der Versuchsansätze ohne Viruszugabe lag. In diesen Versuchsansätzen handelte es sich um das Desinfektionsmittel versetzt mit Aqua bidest., Serum-albumin bzw. FKS, welches entsprechend der obigen Beschreibung anschließend 1 : 100 in PBS mit 10% FKS verdünnt worden war.

Das Flächendesinfektionsmittel gemäß Beispiel 1 zeigte eine ausgeprägte Wirksamkeit gegenüber dem HBV. So war es in der Lage die immunologische Reaktivität des HBsAg bereits nach fünf Minuten entscheidend zu senken. Nach dieser Zeit sind Counts gemessen worden, die unter den Grenzwerten lagen. Damit wurde eine HBV-Wirksamkeit gefunden, also auch in Gegenwart von Eiweiß.

## Patentansprüche

1. Desinfektionsmittel oder Antiseptikum, enthaltend
| | | |
|---|---|---|
| (a) | 42 - 47 Gew.-% | 1-Propanol |
| (b) | 22 - 27 Gew.-% | 2-Propanol |
| (c) | 4 - 6 Gew.-% | Ethanol |
| (d) | mindestens 20 Gew.-% | Wasser |
| (e) | höchstens 0,0001 Gew.-% | an Substanzen, welche unter Normalbedingen als Festkörper vorliegen |
| (f) | keinen wirksamen Gehalt | an weiteren Substanzen, welche sich durch viruzide Eigenschaften auszeichnen |

2. Verwendung einer Zubereitung aus
| | | |
|---|---|---|
| (a) | 42 - 47 Gew.-% | 1-Propanol |
| (b) | 22 - 27 Gew.-% | 2-Propanol |
| (c) | 4 - 6 Gew.-% | Ethanol |
| (d) | mindestens 20 Gew.-% | Wasser |
| (e) | höchstens 0,0001 Gew.-% | an Substanzen, welche unter Normalbedingen als Festkörper vorliegen |
| (f) | keinen wirksamen Gehalt | an weiteren Substanzen, welche sich durch viruzide Eigenschaften auszeichnen |
zur Herstellung eines Desinfektionsmittel oder Antiseptikum.

3. Verwendung von Zusammensetzungen nach Anspruch 1 zur Herstellung von Zubereitungen zur Bekämpfung oder Inaktivierung des HIV-Virus oder des Hepatitis B-Virus.

4. Verwendung von Zusammensetzungen nach Anspruch 1 zur Herstellung von Zubereitungen zur Flächendesinfektion.

## Claims

1. Disinfectant or antiseptic containing
| | | |
|---|---|---|
| (a) | 42-47% by wt | of 1-propanol |
| (b) | 22-27% by wt | of 2-propanol |
| (c) | 4-6% by wt | of ethanol |
| (d) | at least 20% by wt | of water |
| (e) | not more than 0.0001% by wt | of substances which are solids under normal conditions |
| (f) | no effective content | of other substances distinguished by virucidal properties. |

2. Use of a preparation of
| | | |
|---|---|---|
| (a) | 42-47% by wt | of 1-propanol |
| (b) | 22-27% by wt | of 2-propanol |
| (c) | 4-6% by wt | of ethanol |
| (d) | at least 20% by wt | of water |
| (e) | not more than 0.0001% by wt | of substances which are solids under normal conditions |
| (f) | no effective content | of other substances distinguished by virucidal properties |
for producing a disinfectant or antiseptic.

3. Use of compositions according to Claim 1 for producing preparations for controlling or inactivating HIV virus or hepatitis B virus.

4. Use of compositions according to Claim 1 for producing preparations for surface disinfection.

## Revendications

1. Agent de désinfection ou antiseptique, contenant:
| | | |
|---|---|---|
| (a) | 42-47% en poids | de 1-propanol |
| (b) | 22-27% en poids | de 2-propanol |
| (c) | 4-6% en poids | d'éthanol |
| (d) | au moins 20% en poids | d'eau |
| (e) | au plus 0,0001% en poids | de substances qui se présentent sous la forme de corps solides en conditions normales |
| (f) | aucune teneur active | en autres substances qui se caractérisent par des propriétés viricides |

2. Utilisation d'une préparation constituée de:
| | | |
|---|---|---|
| (a) | 42-47% en poids | de 1-propanol |
| (b) | 22-27% en poids | de 2-propanol |
| (c) | 4-6% en poids | d'éthanol |
| (d) | au moins 20% en poids | d'eau |
| (e) | au plus 0,0001% en poids | de substances qui se présentent sous la forme de corps solides en conditions normales |
| (f) | aucune teneur active | en autres substances qui se caractérisent par des propriétés viricides |
pour la préparation d'un agent de désinfection ou d'un antiseptique.

3. Utilisation de compositions selon la revendication 1, pour la fabrication de préparations pour lutter ou inactiver le virus HIV ou le virus de l'hépatite B.

4. Utilisation de compositions selon la revendication 1, pour la fabrication de préparations pour la désinfection de surfaces.
